# EUROPÄISCHE PATENTSCHRIFT

(11) **EP 2 366 212 B1**
(45) Veröffentlichungstag und Bekanntmachung des Hinweises auf die Patenterteilung: **19.10.2016**
(21) Anmeldenummer: 09771704.5
(22) Anmeldetag: 25.11.2009
(51) Int. Cl.: H01R 13/52, H01R 24/54, B29C 45/14, H01R 13/717, H01R 13/66

(54) **ELEKTRISCHER MEHRFACHVERTEILER**
ELECTRIC MULTIPLE DISTRIBUTOR
DISTRIBUTEUR ÉLECTRIQUE MULTIPLE

(30) Priorität: 28.11.2008 DE 102008059477
(43) Veröffentlichungstag der Anmeldung: 21.09.2011
(73) Patentinhaber: Phoenix Contact GmbH & Co. KG, 32825 Blomberg (DE)
(72) Erfinder: HENSEN, Hans-Joachim, 32657 Lemgo (DE); STARKE, Cord, 32825 Blomberg (DE); WIMMER, Michael, 32657 Lemgo (DE)
(74) Vertreter: Muth, Bruno
(86) Internationale Anmeldenummer: PCT/EP2009/008385
(87) Internationale Veröffentlichungsnummer: WO 2010/060608

(56) Entgegenhaltungen:
- EP-A- 0 448 230
- DE-U1- 8 912 226
- GB-A- 2 274 209
- US-A- 1 871 397
- US-A- 3 676 744
- US-A- 3 728 666
- US-B1- 6 409 530

## Beschreibung

Die vorliegende Erfindung betrifft einen elektrischen Mehrfachverteiler, bei dem drei, vier oder mehr elektrische Anschlüsse an dem Mehrfachverteiler vorgesehen sind, um elektrische Signale, Daten und dergleichen mehr gezielt an die entsprechenden Anschlüsse verteilen und zu übertragen.

Im Stand der Technik sind verschiedene elektrische Mehrfachverteiler bekannt geworden. Elektrische Mehrfachverteiler werden für unterschiedliche Einsatzgebiete vorgesehen.

Einen einfachen Mehrfachverteiler ohne äußere Abschirmung oder Isolierung der Verbindungsstelle offenbart die US 3,728,666.

Dabei werden zwei Coaxialkabel in zwei Öffnungen eines T-förmigen Verteiler eingesteckt und über spezielle geschraubte Hülsen mit diesem verbunden. Zwei von solchen T-förmigen Verteilern können wiederum über den jeweils noch freien Anschluss verbunden werden. Dazu gibt es T-förmige Verteiler mit männlichen und welche mit weiblichen Anschlussstücken, die auch über ein Gewinde fest verschraubt werden können.

Aus der EP 0 448 230 A2 ist eine Methode zum Verbinden mehrerer Kabel mit einer kontinuierlichen EMV-Abschirmung bekannt. Dabei werden mehrere geschirmte Kabel an einer Verbindungsstelle miteinander verbunden. Um die Verbindungsstelle ausreichend abzuschirmen, wird diese zunächst mit einem abschirmenden Gewebe ummantelt und anschließend mit einer äußeren Schutzhülle versehen. Diese Bauart ist allerdings unflexibel, aufwendig und nach Montage nahezu nicht mehr veränderbar.

Oftmals umfassen elektrische Mehrfachverteiler ein Gehäuse, welches die vorgesehene Anzahl von elektrischen Anschlüssen aufweist. Diese Gehäuse können wie z.B. in der US 3,676,744 aus zwei gleichen Teilen bestehen. Die zur Oberseite identische Unterseite wird bei der Monatage dann zu einem Gehäuse zusammen gesteckt. Ein ähnliches Prinzip mit zwei Gehäusehälften ist auch aus der DE 89 12 226 bekannt. Diese beschreibt die Ummantelung eines aus Kupfer gestanzten, gabelförmigen Leiterkörpers mit einem isolierenden Hohlkörper. Dieser isolierende Hohlkörper wird von zwei entsprechend geformten Halbschalen gebildet, die um den entsprechend geformten Leiterkörper herum zusammengesetzt werden.

Um über den aktuellen Zustand eines Mehrfachverteilers informiert zu werden, sind Gehäuse bekannt, in deren Gehäuse eine Zustandsanzeige integriert ist. Die US 6,409,530 zeigt hierzu die Möglichkeit, den Status einer Ladebuchse anzuzeigen. Dabei leuchtet eine LED, sobald Strom zwischen Platine und Anschlussstecker fließt.

Die im Inneren des Gehäuses vorgesehenen Drähte oder elektrischen Leitungen zur Verbindung der einzelnen Anschlüsse sind zum Schutz vor Feuchtigkeit oftmals mit einem isolierenden Material umspritzt. Gegebenenfalls kann eine äußere Gehäuseschale elektrisch leitfähig vorgesehen sein, um für den elektrischen Mehrfachverteiler eine EMV-Abschirmung zur Verfügung zu stellen.

Je nach Anwendungsfall sind unterschiedliche Gehäuse vorgesehen, um einzelne Kabelabgänge, Kabel oder elektrische Steckverbinder anzuschließen. Dadurch wird eine hohe Anzahl verschiedener Gehäuse erforderlich, welche für die unterschiedlichen Anwendungsfälle bevorratet werden müssen. Weiterhin müssen Varianten mit vorgesehener EMV-Abschirmung und ohne EMV-Abschirmung vorgehalten werden.

Vor dem Hintergrund des beschriebenen Standes der Technik ist es deshalb die Aufgabe der vorliegenden Erfindung, einen elektrischen Mehrfachverteiler zur Verfügung zu stellen, der flexibel verwendbar ist und sich zum Anschluss von Kabelabgängen und Steckverbindern eignet, wobei wahlweise eine EMV-Abschirmung möglich ist.

Diese Aufgabe wird gelöst durch einen elektrischen Mehrfachverteiler mit den Merkmalen des Anspruchs 1. Bevorzugte Weiterbildungen der Erfindung sind Gegenstand der Unteransprüche. Weitere vorteilhafte Merkmale und Eigenschaften der Erfindung ergeben sich aus der nachfolgenden Beschreibung.

Der erfindungsgemäße elektrische Mehrfachverteiler umfasst ein Gehäuse mit wenigstens drei elektrischen Anschlüssen und wenigstens einem Verteilsystem in dem Gehäuse, über welches die elektrischen Anschlüsse gezielt miteinander verbindbar sind. Dabei ist das Verteilsystem durch ein Innengehäuse des Gehäuses positionierbar und es ist eine elektromagnetische Abschirmeinrichtung sowie eine Schutzeinrichtung gegen Feuchtigkeit und/oder Staub an dem Innengehäuse vorgesehen. Das Innengehäuse ist modular ausgebildet und zum wahlweisen Anschluss wenigstens eines geschirmten Kabels oder Kabelabgangs und zum Anschluss wenigstens eines Steckverbinders ausgebildet. Dazu ist an den Anschlusspositionen der elektrischen Anschlüsse jeweils wenigstens eine Aufnahmekontur zur Aufnahme einer Anschlusshülse vorgesehen und an dem Innengehäuse ist wenigstens eine Klemmeinrichtung zur Kontaktierung einer Abschirmleitung eines Kabels vorgesehen.

Der erfindungsgemäße elektrische Mehrfachverteiler hat viele Vorteile. Ein erheblicher Vorteil des erfindungsgemäßen elektrischen Mehrfachverteilers ist die Modularität, welche den wahlweisen Anschluss von Kabeln, Kabelabgängen oder Steckverbindern an das Gehäuse erlaubt. So ist es möglich, an einem Dreifach-Mehrfachverteiler sowohl entweder drei Kabel, Kabelabgänge oder auch drei elektrische Steckverbinder anzuschließen. Dabei kann jeweils auf das gleiche Gehäuse zurückgegriffen werden, sodass weniger Teile bevorratet werden müssen, was die Lagerkosten und die Produktionskosten senkt. Ein weiterer erheblicher Vorteil ist, dass wahlweise eine Abschirmung der angeschlossenen elektrischen Leitungen erfolgen kann. Grundsätzlich ist das Innengehäuse des erfindungsgemäßen elektrischen Mehrfachverteilers mit einer elektromagnetischen Abschirmeinrichtung versehen, sodass sowohl anzuschließende Kabel oder Kabelabgänge als auch anzuschließende Steckverbinder in abgeschirmter Weise mit dem Innengehäuse verbunden werden können. Dazu weist das Innengehäuse eine Aufnahmekontur zur Kontaktierung einer Anschlusshülse auf und es ist eine Klemmvorrichtung vorgesehen, um eine Abschirmleitung eines Kabels elektrisch zu kontaktieren. Dadurch ist ein besonders flexibler Einsatz des elektrischen Mehrfachverteilers möglich.

Der Mehrfachverteiler kann in unterschiedlichsten Formen vorgesehen sein. Beispielsweise ist eine Y-Form oder einer T-Form möglich. Bevorzugt sind auch eine H-Form, U-Form und eine X-Form. Auch beliebige andere Gestaltungen des Gehäuses und Ausrichtungen der elektrischen Anschlüsse sind möglich.

Vorzugsweise umfasst das Verteilsystem wenigstens eine Leiterplatte, welche insbesondere fest ausgeführt ist, aber auch flexibel ausgestaltet sein kann. Die Leiterplatte wird mit den einzelnen elektrischen Anschlüssen verbunden, sodass die Leiterplatte gezielt einzelne Strom- bzw. Signalleitungen miteinander verbindet.

Vorteilhafterweise kann an der Leiterplatte wenigstens ein elektrisches Bauelement anschlössen sein, welches zur Verarbeitung oder zur Anzeige von Signalen oder Zuständen des elektrischen Mehrfachverteilers dient. Möglich ist aber auch der Einsatz anderer elektrischer Bauelemente.

In bevorzugten Weiterbildungen besteht das Innengehäuse aus zwei insbesondere identischen Innengehäuseteilen, welche vorzugsweise symmetrisch aufgebaut sind. Das erleichtert die Herstellung, da nur ein Formteil bei der Herstellung verwendet werden muss.

Vorzugsweise weisen beide Gehäuseteile wenigstens eine Bohrung oder Einstecköffnung auf und wenigstens einen Zapfen, um die Gehäuseteile miteinander verrasten zu können.

In vorteilhaften Weiterbildungen ist die Abschirmeinrichtung des Innengehäuses, welches aus einem Metall besteht kann, um die EMV- Abschirmung zu gewährleisten. Es ist ebenso möglich und bevorzugt, dass das Innengehäuse aus einem Kunststoff besteht, der mit einer leitenden Beschichtung versehen ist, um die nötige elektrische Leitfähigkeit für die EMV-Abschirmung zu erzielen. Vorzugsweise ist eine solche Beschichtung auf der Innengehäuseinnenseite vorgesehen, um eine Isolierung nach außen hin zu bewirken.

In bevorzugten Ausgestaltungen wird die Schutzeinrichtung gegen Feuchtigkeit und/oder Staub durch eine Umspritzung des Verteilsystems mit Kunststoff, Kunstharz oder einem Kleber oder dergleichen gebildet. Dabei dient das Innengehäuse zur Positionierung des Verteilsystems bzw. der Leiterplatte in dem Gehäuse. Anschließend wird der Innenraum des Gehäuses mit Kunststoff oder einem anderen geeigneten Material ausgespritzt, sodass die im Gehäuse aufgenommenen elektrischen Anschlüsse feuchtigkeitsgeschützt gehalten werden.

Zur Positionierung der Leiterplatte weist das Innengehäuse zur Aufnahme der Leiterplatte vorzugsweise wenigstens eine Aufnahmenut auf, deren Abmessungen eine Aufnahme der Leiterplatte insbesondere mit etwas Spiel erlaubt. Beispielsweise kann das Innengehäuse durch Stege in den Gehäuseteilen gebildet werden, in denen die Aufnahmenut zur Aufnahme und Positionierung der Leiterplatte ausgebildet sind. Dadurch kann in den mit einer Nut versehenen Steg des Innengehäuses eine Leiterplatte eingeführt werden, wenn der elektrische Mehrfachverteiler montiert werden soll. Im Anschluss daran kann das zweite Gehäuseteil auf das erste Gehäuseteil aufgesteckt werden, wodurch die Leiterplatte von den Stegen des Innengehäuses aufgenommen wird. Bei dem anschließenden Ausspritzen des Innenraums des Gehäuses bewirkt das Innengehäuse eine im Wesentlichen unverrückbare Position der Leiterplatte, sodass definierte Abstände der Leiterplatte von den Außenkanten des Gehäuses vorhanden sind. Im Stand der Technik führt ein Spritzvorgang oft zu Verschiebungen der Leiterplatte, sodass elektrisch nötige Abstände zu den Außenkanten nicht mehr eingehalten werden.

In besonderes bevorzugten Ausgestaltungen sind in wenigstens einer Aufnahmenut wenigstens zwei voneinander beabstandete Zapfen vorgesehen, um die Leiterplatte definiert an der Aufnahmenut zu halten und um nur kleine Anlageflächen der Leiterplatte an dem Innengehäuse bzw. dem Gehäuse zu erhalten. Dadurch wird die Kriechmöglichkeit eintretender Feuchtigkeit erheblich reduziert. Wenn Feuchtigkeit in das mit einem Kunststoff oder dergleichen gefüllte Gehäuse eintritt, geschieht dies meist entlang der Grenzflächen des füllenden Kunststoffs und des Gehäuses. Durch eine punktweise Anlage der Leiterplatte an dem Innengehäuse wird eine solche Kriechmöglichkeit von Feuchtigkeit auf ein sehr geringes Maß beschränkt, da nur wenige kleine Anlagepunkte vorgesehen sind und die Leiterplatte nicht mit der kompletten Länge an dem Innengehäuse anliegt.

Vorzugsweise ist an dem Gehäuse eine Öffnung zur Durchführung eines Befestigungsmittels vorgesehen, um das Gehäuse beispielsweise an einem anderen Bauteil, wie z.B. einer Maschine zu befestigen. Die Öffnung in dem Gehäuse ist insbesondere als Mehrkantöffnung vorgesehen, welche mit einem geeigneten Gegenstück einen Formschluss erlaubt. Eine solche Mehrkantöffnung kann insbesondere auch beim Spritzgussprozess eingesetzt werden, um das Gehäuse definiert in der Spritzgussanlage zu halten.

An dem elektrischen Mehrfachverteiler kann wenigstens eine Zustandsanzeige vorgesehen sein, die beispielsweise als Anschlussanzeige und/oder als Signalanzeige und/oder als Schaltanzeige dient. Darüber kann wenigstens ein Zustand des elektrischen Mehrfachverteilers angezeigt werden. Insbesondere wird eine optische Zustandsanzeige vorgesehen, die vorzugsweise als LED ausgeführt ist. In dem Gehäuse ist dann vorzugsweise für die Zustandsanzeige eine Öffnung nach außen vorgesehen, um das Signal der Zustandsanzeige außen optisch sichtbar zu erhalten. Um den Eintritt von Feuchtigkeit zu verhindern, kann wenigstens im Bereich der Öffnung für die Zustandsanzeige ein wenigstens teilweise transparentes Spritzgussmaterial eingesetzt werden.

In allen Ausgestaltungen ist es bevorzugt, dass die Aufnahmekontur eine umlaufende Konturnase oder eine umlaufende Konturnut umfasst, um eine Anschlusshülse definiert aufzunehmen. Eine solche Anschlusshülse kann Bestandteil eines Steckers oder einer Buchse sein, um Steckverbinder gezielt an elektrischen Mehrfachverteiler anschließen zu können.

Die insbesondere zylindrisch ausgebildete Aufnahmekontur kann wenigstens eine Pressnase aufweisen, um die Aufnahmekontur mit einer aufzunehmenden Anschlusshülse zu verpressen. Die Aufnahmekontur ist insbesondere elektrisch leitfähig ausgebildet, sodass ein zuverlässiger elektrischer Kontakt zwischen der Anschlusshülse und dem Gehäuse des elektrischen Mehrfachverteilers vorhanden ist. Dadurch wird es ermöglicht, die Abschirmung eines anzuschließenden Steckverbinders oder die Abschirmung eines anzuschließenden Kabels mit einer solchen Anschlusshülse zu verbinden, um eine durchgehende und vollständige EMV-Abschirmung zu gewährleisten.

Bei anzuschließenden Kabeln kann vor der Montage eine solche Anschlusshülse über das Kabelende geschoben und mit der Abschirmung oder Abschirmlitze verbunden werden, um eine entsprechende Abschirmung zu gewährleisten.

Es ist aber auch möglich und im Sinne der Modularität bevorzugt, dass die Abschirmlitze oder die Abschirmung eines anzuschließenden Kabels in das Gehäuse eingeführt wird und dort an einer Klemmeinrichtung kontaktiert und mit dem elektrisch leitenden Gehäuse verbunden wird, um die nötige Abschirmung des Gehäuses zu gewährleisten. Dazu kann eine Verpressung des Schirmgeflechts mit den Gehäusehälften erfolgen.

Insgesamt wird durch die Erfindung ein elektrischer Mehrfachverteiler zur Verfügung gestellt, bei dem durch ein leitfähiges Gehäuse eine EMV-Schirmung zur Verfügung gestellt wird und welches zum Schutz des Eintritts von Feuchtigkeit und Wasser mit einem Kunststoff oder dergleichen aufgefüllt wird, sodass eine IP67-Tauglichkeit erreicht wird.

Durch die Anschlussmöglichkeit von als Steckern oder Buchsen ausgeführten elektrischen Steckverbindern und durch die Anschlussmöglichkeit von ungeschirmten oder geschirmten Kabeln wird eine flexible Einsatzmöglichkeit ermöglicht. Die Kontaktierung der Abschirmung eines Steckverbinders oder eines anzuschließenden Kabels kann über eine leitfähige Anschlusshülse bzw. Schirmhülse erfolgen. Die Abschirmung eines Kabels kann auch durch eine Kontaktierung der Abschirmlitze oder der elektrischen Abschirmung des Kabels durch eine Klemmverbindung an dem Gehäuse ermöglicht werden.

Das Gehäuse bietet im Inneren Platz für eine Leiterplatte, die mit weiteren Bauteilen bestückt werden kann, wie z.B. Widerständen, Optokoppler, LEDs etc. Insgesamt lässt sich eine beliebig hohe Variantenvielfalt mit wenig Aufwand realisieren.

Insgesamt stellt die Erfindung einen einfachen elektrischen Mehrfachverteiler zur Verfügung, mit dem eine flexible Verwendung möglich ist.

Weitere Vorteile und Merkmale der Erfindung ergeben sich aus den Ausführungsbeispielen, die nun mit Bezug auf die beiliegenden Figuren erläutert werden.

Darin zeigen:
- Figur 1: eine perspektivische Gesamtansicht eines erfindungsgemäßen elektrischen Mehrfachverteilers;
- Figur 2: eine perspektivische Gesamtansicht des elektrischen Mehrfachverteilers nach Fig. 1 ohne äußere Umspritzung;
- Figur 3: den elektrischen Mehrfachverteiler aus Fig. 1 mit geöffnetem Innengehäuse;
- Figur 4: ein Gehäuseteil des elektrischen Mehrfachverteilers nach Fig. 1 vor der Montage und einen anbaubaren Steckverbinder.

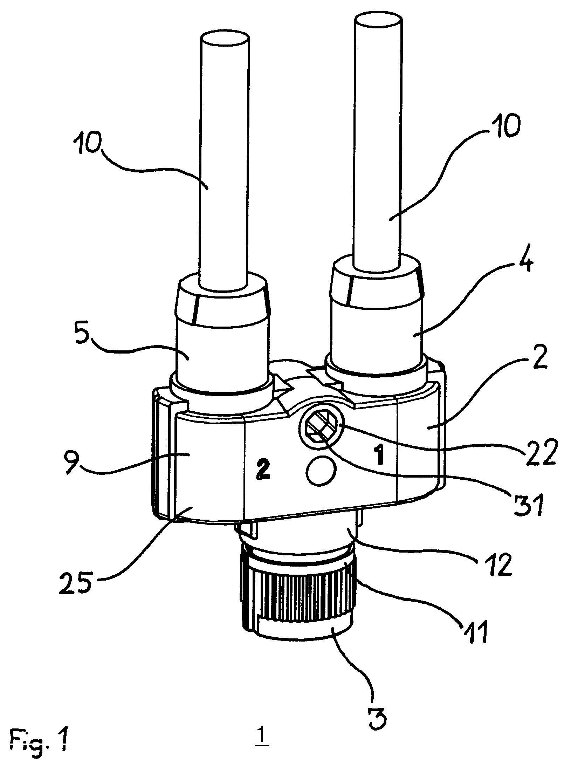

Mit Bezug auf die Figuren 1 - 4 wird im folgenden ein Ausführungsbeispiel eines erfindungsgemäßen elektrischen Mehrfachverteilers beschrieben, wobei der elektrische Mehrfachverteiler 1 in Fig. 1 in einer perspektivischen Ansicht dargestellt ist.

Der elektrische Mehrfachverteiler verfügt hier über drei elektrische Anschlüsse 3, 4 und 5 an einem Gehäuse 2, welches zwei symmetrische Innengehäuseteile 21 und 22 umschließt.

Der elektrische Mehrfachverteiler 1 ist im Ausführungsbeispiel als Y-Verteiler ausgeführt, kann aber auch andere Gehäuseformen und Anschlussmöglichkeiten aufweisen. Nur beispielsweise seien eine T-Form oder H-Form für vier elektrische Anschlüsse erwähnt. Auch die Anordnung von fünf, sechs oder mehr elektrischen Anschlüssen ist möglich.

In der Darstellung gemäß Fig. 1 ist am unteren Ende des elektrischen Mehrfachverteilers 1 ein Steckverbinder 11 an der Anschlussposition 12 vorgesehen. Der Steckverbinder 11 ist hier als Buchse vorgesehen, an den ein entsprechender elektrischer Stecker anschließbar ist. Umgekehrt ist es auch möglich, den Steckverbinder 11 als Stecker auszurüsten, um eine entsprechende Buchse anschließen zu können.

Die beiden anderen elektrischen Anschlüsse 4 und 5 , die hier auf der Darstellung gemäß Fig. 1 auf der oberen Gehäuseseite vorgesehen sind, sind als Kabelabgang 10 ausgeführt, die bei der Montage des Gehäuses 2 genauso wie der elektrische Steckverbinder 11 an dem Gehäuse 2 angeschlossen werden.

Auf der hier sichtbaren Oberseite des Gehäuses 2 ist eine Öffnung 31 als Mehrkantöffnung ausgebildet, die sich durch das komplette Gehäuse 2 erstreckt. Damit kann das Gehäuse 2 beispielsweise an einer Maschine oder dergleichen befestigt werden, wozu durch die Öffnung 31 eine Schraube gesteckt und an der Maschine festgeschraubt wird. Bei der Montage und der Herstellung des elektrischen Mehrfachverteilers 1 dient die Öffnung 31 zur Fixierung der Innengehäuse 21 und 22 in der Spritzgussmaschine, um eine definierte Lage des Gehäuses zu gewährleisten.

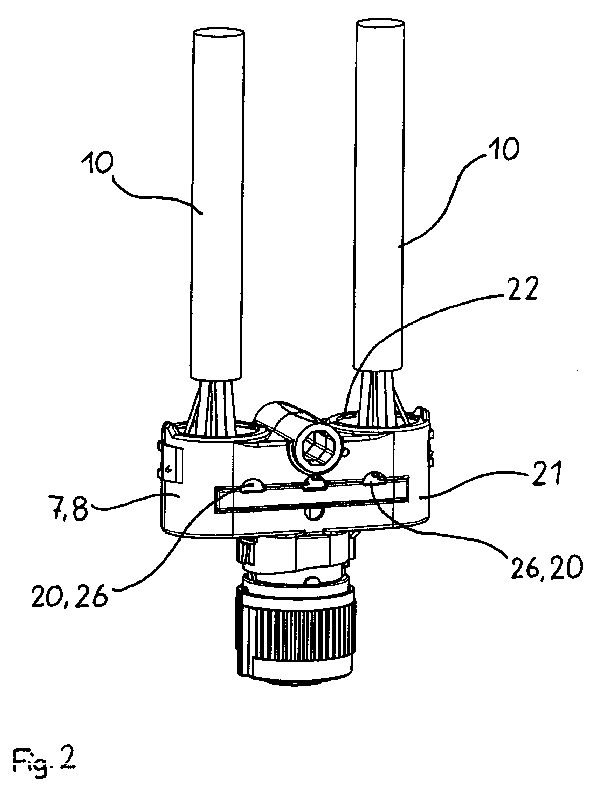

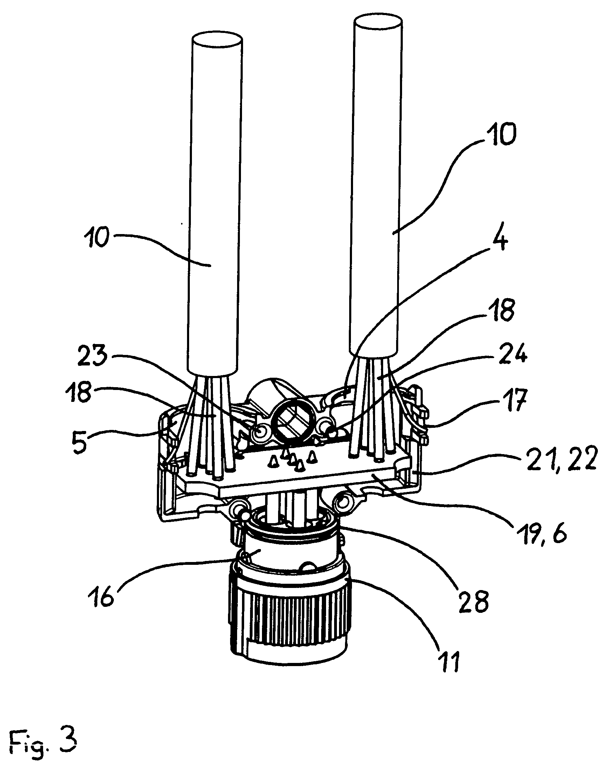

In Fig. 2 ist der elektrische Mehrfachverteiler 1 ohne äußere Umspritzung abgebildet. Deutlich erkennbar sind die Kabelabgänge 10, bei denen die einzelnen Adern oder Litzen mit entsprechenden Anschlüssen an dem Innengehäuse 7 verbunden sind. Die Abschirmleitung 18 (vgl. auch Fig. 3) wird von den anderen Leitern separat mit dem Innengehäuse 7 verbunden. Die beiden miteinander verbundenen Gehäuseteile 21 und 22 sind leitend ausgeführt oder ist einer leitenden Beschichtung versehen, sodass eine zuverlässige Abschirmung erzielt wird. Ebenfalls deutlich sichtbar sind die als Zustandsanzeigen 26 dienenden elektrischen Bauelemente 20, die an dem Innengehäuse 21, 22 bzw. an den Gehäuseteilen aufgenommen sind und den jeweiligen Schalt- oder Abschlusszustand des elektrischen Mehrfachverteilers 1 anzeigen.

Bei dem Spritzgussverfahren dient die Öffnung, in der die Zustandsanzeige 26 als elektrisches Bauteil 20 sichtbar angeordnet ist, zum Einführen wenigstens eines Kunststoffs 25 oder Klebers oder dergleichen. Wenigstens im oberen Bereich oberhalb der Zustandsanzeige 26 wird zum Verschließen der Öffnung ein transparenter Kunststoff verwendet, sodass die optische Zustandsanzeige 26 von außen sichtbar ist.

In Fig. 3 ist in einer perspektivischen Darstellung der Steckverbinder 1 mit geöffnetem Innengehäuse 7 abgebildet, sodass in das Gehäuseteil 21 Einblick gewährt wird.

In der Darstellung gemäß Fig. 3 ist das als Leiterplatte 19 ausgeführte Verteilsystem 6 klar erkennbar. Die Leiterplatte 19 ist an dem Innengehäuseteil 21 des Innengehäuse 7 definiert aufgenommen. Der Steckverbinder 11 bzw. dessen Kontakte sind mit der Leiterplatte 19 hier verlötet. In anderen Ausgestaltungen ist es auch möglich, die Kontakte des Steckverbinders 11 oder der Kabelabgang 10 an der Leiterplatte festzuklemmen, festzuschrauben oder die entsprechenden Leiter mit den entsprechenden Kontakten auf der Leiterplatte sonst wie zu verbinden.

Das Innengehäuseteil 21 weist genauso wie das Innengehäuseteil 22 jeweils zwei Bohrungen 23 und korrespondierte Zapfen 24 auf, die derart symmetrisch angeordnet sind, dass beim Schließen der beiden Innengehäuseteile 21 und 22 die Zapfen 24 jeweils in den Bohrungen 23 verrasten.

Beim Anschluss eines Kabelabgangs 10 an die Leiterplatte 19 wird der Kabelabgang an einem der elektrischen Anschlüsse 4 oder 5 in das Innengehäuse 7 eingeführt und die in dem Kabelabgang enthaltenen Leiter werden beispielsweise mit der Leiterplatte 19 verlötet, um eine entsprechende elektrische Verbindung herzustellen.

Der Steckverbinder 11 weist auf seinem Außenumfang eine Konturnut 28 auf, die mit der Aufnahmekontur 15 in dem Innengehäuseteil 21 oder 22 zusammenwirkt, um eine feste mechanische Verbindung der Anschlusshülse 16 mit dem Innengehäuse 7 zu ermöglichen. Die als umlaufende Konturnase 27 ausgebildete Aufnahmekontur bewirkt zusammen mit der Konturnut 28 eine in axialer Richtung feste Aufnahme der Anschlusshülse 16, die somit gegen ein axiales Verschieben gesichert ist und auch Biegekräfte aufnehmen kann.

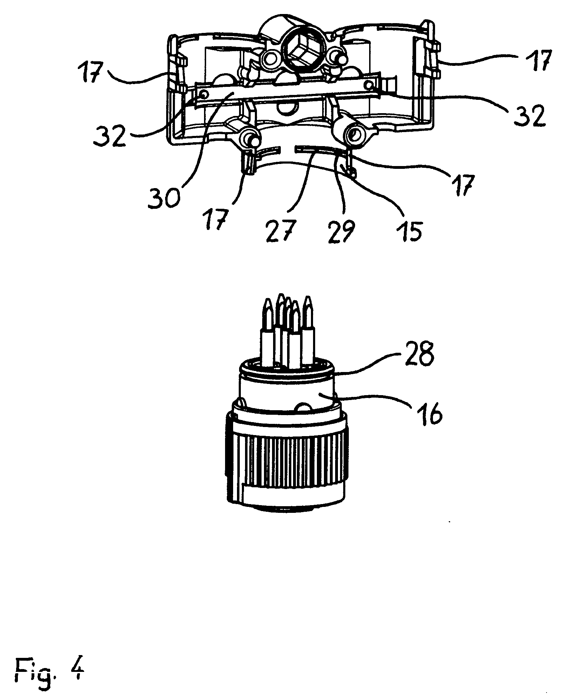

Die Struktur des Gehäuses wird in Fig. 4 klar erkenntlich, da dort nur das Innengehäuseteil 21 und eine anbaubarer Steckverbinder in perspektivischer Darstellung abgebildet sind. Das Innengehäuseteil 22 ist identisch ausgebildet und wird bei der Montage mit dem Innengehäuseteil 21 verpresst.

Das Innengehäuse 21 des Gehäuses 2 weist eine Aufnahmenut 30 auf, in der hier zwei Zapfen 32 angeordnet sind. In die Nut 30 wird bei der Montage die Leiterplatte 19 eingeführt und von dieser Nut 30 mit etwas Spiel gehalten, sodass sich eine definierte Position der Leiterplatte 19 in dem Gehäuse 2 ergibt. Undefinierte Positionen wie im Stand der Technik nach dem Eingießen des Kunststoffs werden dadurch zuverlässig verhindert.

Um die Gefahr eines möglichen Eindringens von Feuchtigkeit zu verringern und um die nötige Kriechstrecke zu vergrößern, sind die Zapfen 32 in der Nut 30 vorgesehen. Die Leiterplatte 19 liegt über die Zapfen 32 an dem Gehäuseteil 21 an, während sich die Nut 30 bei dem Vergießen mit Kunststoff oder einem Harz füllt.

Die Konturnase 27 der Aufnahmekontur 15 weist hier eine oder zwei Pressnasen 29 auf, mit denen eine Anschlusshülse 16 an der Aufnahmekontur eingepresst wird. Dadurch wird ein sicherer elektrischer Kontakt zwischen der Aufnahmekontur 15 und somit im Innengehäuse 7 und der aus einem elektrisch leitenden Material gebildeten Anschlusshülse 16 zur Verfügung gestellt, sodass eine durchgängige Abschirmung von der Anschlusshülse 16 über das gesamte Gehäuse 21 und 22 ermöglicht wird.

Nur schematisch eingezeichnet ist eine Abschirmleitung 18 eines Kabelabgangs 10, welches hier an dem elektrischen Anschluss 5 in das Innengehäuse 7 eingeführt wird und von dort zur Seite umgelegt wird, wo es an der Klemmeinrichtung 17 mit dem Gehäuse beim Schließen des Gehäuses verklemmt wird. Die Gehäuseteile 21 und 22 weisen dazu an beiden Enden entsprechend ausgebildete Klemmteile auf, die beim Schließen des Gehäuses entsprechend verrasten und eine dazwischen aufgenommene Abschirmlitze effektiv kontaktieren.

Insgesamt wird ein elektrischer Mehrfachverteiler 1 zur Verfügung gestellt, der unabhängig von dem Anschluss von Kabelabgängen 10 oder Steckverbindern 11 über ein wenigstens auf der Innenseite leitfähiges Gehäuse 21 und 22 effektiv eine mögliche Abschirmung von anschließenden Steckverbindern 11 und Kabelabgängen 10 ermöglicht. Falls beim Anschluss von Kabelabgängen 10 eine Anschlusshülse 16 auf den Kabelabgang aufgesteckt wird, wird eine vollständig lückenlose Abschirmung anzuschließender Steckverbinder 11 als auch anzuschließender Kabelabgänge 10 gewährleistet.

Da das Gehäuse 2 nach dem Anschließen der entsprechenden Kontakte an die Leiterplatte 19 und dem Einführen der Leiterplatte 19 und dem Verschließen der Gehäuseteile 21 und 22 mit einem Kunststoff 25 oder einem Kleber oder Harz ausgefüllt oder auch umhüllt wird, stellt der elektrische Mehrfachverteiler 1 ein System dar, welches effektiv gegen den Eintritt von Staub und Feuchtigkeit geschützt ist.

Durch den einfachen Aufbau bedingt kann für unterschiedlichste elektrische Mehrfachverteiler das gleiche Innengehäuse 7 verwendet werden, sodass sich Vorteile in der Produktion und Lagerhaltung ergeben.

### Bezugszeichenliste

- 1: Elektrischer Mehrfachverteiler
- 2: Gehäuse
- 3: elektrischer Anschluss
- 4: elektrischer Anschluss
- 5: elektrischer Anschluss
- 6: Verteilsystem
- 7: Innengehäuse
- 8: Abschirmeinrichtung
- 9: Schutzeinrichtung
- 10: Kabelabgang
- 11: Steckverbinder
- 12: Anschlussposition

- 15: Aufnahmekontur
- 16: Anschlusshülse
- 17: Klemmeinrichtung
- 18: Abschirmleitung
- 19: Leiterplatte
- 20: elektrisches Bauelement
- 21: Innengehäuseteil
- 22: Innengehäuseteil
- 23: Bohrung
- 24: Zapfen
- 25: Kunststoff
- 26: Zustandsanzeige
- 27: Konturnase
- 28: Konturnut
- 29: Pressnase
- 30: Aufnahmenut
- 31: Öffnung
- 32: Zapfen

## Patentansprüche

1. Elektrischer Mehrfachverteiler (1) mit einem Gehäuse (2) und wenigstens drei elektrischen Anschlüssen (3, 4, 5) und wenigstens einem Verteilsystem (6) in dem Gehäuse (2), über welches die elektrischen Anschlüsse (3, 4, 5) gezielt miteinander verbindbar sind, wobei das Verteilsystem (6) durch ein Innengehäuse (7) des Gehäuses (2) positionierbar ist, und wobei eine elektromagnetische Abschirmeinrichtung (8) und eine Schutzeinrichtung (9) gegen Feuchtigkeit und/oder Staub an dem Innengehäuse (7) vorgesehen sind,
**dadurch gekennzeichnet,**
**dass** das Innengehäuse (7) modular ausgebildet ist wodurch es an jedem der elektrischen Anschlüsse (3, 4, 5) wahlweise zum Anschluss wenigstens eines geschirmten Kabelabgangs (10) oder zum Anschluss wenigstens eines Steckverbinders (11) ausgebildet ist, wozu an den Anschlusspositionen (12) jeweils wenigstens eine Aufnahmekontur (15) zur Aufnahme einer Anschlusshülse (16) eines Steckverbinders (11) vorgesehen ist und wozu an dem Innengehäuse (7) wenigstens eine Klemmeinrichtung (17) zur Kontaktierung einer Abschirmleitung (18) eines Kabelabgangs (10) vorgesehen ist.

2. Mehrfachverteiler (1) nach Anspruch 1, wobei das Verteilsystem (6) wenigstens eine Leiterplatte (19) umfasst.

3. Mehrfachverteiler (1) nach Anspruch 2, wobei an der Leiterplatte (19) wenigstens ein elektrisches Bauelement (20) angeschlossen ist.

4. Mehrfachverteiler (1) nach einem der vorhergehenden Ansprüche, wobei das Innengehäuse (7) aus zwei insbesondere identischen Gehäuseteilen (21, 22) besteht.

5. Mehrfachverteiler (1) nach Anspruch 4, wobei beide Innengehäuseteile (21, 22) wenigstens eine Bohrung (23) und einen Zapfen (24) aufweisen, um die Innengehäuseteile (21, 22) miteinander zu verrasten.

6. Mehrfachverteiler (1) nach einem der vorhergehenden Ansprüche, wobei die Abschirmeinrichtung (8) das Innengehäuse (7) umfasst, welches aus einem Metall oder aus einem mit einer leitenden Beschichtung versehenen Kunststoff besteht.

7. Mehrfachverteiler (1) nach einem der vorhergehenden Ansprüche, wobei die Schutzeinrichtung (9) gegen Feuchtigkeit und/oder Staub durch eine Umspritzung des Verteilsystems (6) mit Kunststoff (25), Kunstharz oder Kleber gebildet wird.

8. Mehrfachverteiler (1) nach Anspruch 2 oder Anspruch 2 und wenigstens einem der Ansprüche 3-7, wobei das Innengehäuse (7) zur Aufnahme der Leiterplatte (19) wenigstens eine Aufnahmenut (30) aufweist, deren Abmessungen eine Aufnahme der Leiterplatte mit Spiel erlauben.

9. Mehrfachverteiler (1) nach dem vorhergehenden Anspruch, wobei an der Aufnahmenut (30) wenigstens zwei voneinander beabstandete Zapfen (32) aufweist, um die Leiterplatte (19) an der Aufnahmenut (30) definiert zu halten.

10. Mehrfachverteiler (1) nach einem der vorhergehenden Ansprüche, wobei an dem Gehäuse (2) eine Öffnung (31) zur Durchführung eines Befestigungsmittels vorgesehen ist, um das Gehäuse (2) an einem anderen Bauteil zu befestigen.

11. Mehrfachverteiler (1) nach einem der vorhergehenden Ansprüche, wobei wenigstens eine Zustandsanzeige (26) vorgesehen ist.

12. Mehrfachverteiler (1) nach dem vorhergehenden Anspruch, wobei die Zustandsanzeige (26) als Anschlussanzeige und/oder Signalanzeige und/oder Schaltanzeige dient.

13. Mehrfachverteiler (1) nach einem der vorhergehenden Ansprüche, wobei die Aufnahmekontur (15) eine umlaufende Konturnase (27) oder Konturnut (28) umfasst.

14. Mehrfachverteiler (1) nach dem vorhergehenden Anspruch, wobei die Aufnahmekontur (15) zylindrisch ausgebildet ist und wenigstens eine Pressnase (29) aufweist, um die Aufnahmekontur (15) mit einer aufzunehmenden Anschlusshülse (16) zu verpressen.

## Claims

1. An electric multiple distributor (1), comprising a housing (2) and a plurality of electrical connections (3, 4, 5) and at least one distribution system (6) in the housing (2), by which the electrical connections (3, 4, 5) can be connected to one another in a targeted manner, wherein the distribution system (6) can be positioned through an inside housing (7) of the housing (2), and wherein an electromagnetic shielding device (8) and a protective device (9) against moisture and/or dust are provided on the inside housing (7),
**characterized in**
**that** the inside housing (7) has a modular design enabling at least one shielded cable outlet (10) or at least one plug connector (11) to be optionally connected to each of the electrical connections (3, 4, 5), for which purpose at least one receiving contour (15) for receiving a connecting sleeve (16) of a plug connector (11) is provided at each of the connection positions (12), and for which purpose at least one clamping device (17) for contacting a shielded line (18) of a cable outlet (10) is provided on the inside housing (7).

2. The multiple distributor (1) according to claim 1, wherein the distribution system (6) comprises at least one circuit board (19).

3. The multiple distributor (1) according to claim 2, wherein at least one electrical component (20) is connected to the circuit board (19).

4. The multiple distributor (1) according to any one of the preceding claims, wherein the inside housing (7) consists of two identical housing parts (21, 22).

5. The multiple distributor (1) according to claim 4, wherein both parts of the inside housing (21, 22) comprise at least one drilled hole (23) and a pin (24) in order to lock the inside housing parts (21, 22) to each other.

6. The multiple distributor (1) according to any one of the preceding claims, wherein the shielding device (8) comprises the inside housing (7), which consists of a metal or of a plastic provided with a conductive coating.

7. The multiple distributor (1) according to any one of the preceding claims, wherein the protective device (9) against moisture and/or dust is formed by encapsulating the distribution system (6) with plastic (25), synthetic resin or adhesive.

8. The multiple distributor (1) according to claim 2 or claim 2 and at least any one of claims 3 - 7, wherein the inside housing (7) has a receiving groove (30) for receiving the circuit board (19), wherein the dimensions of said groove allow the circuit board to be accommodated with clearance.

9. The multiple distributor (1) according to the preceding claim, wherein at least two pins (32) spaced apart from each other are provided on the receiving groove (30), in order to hold the circuit board (19) in a defined position on the receiving groove (30).

10. The multiple distributor (1) according to any one of the preceding claims, wherein an opening (31) is provided on the housing (2) for the passage of an attachment means, in order to attach the housing (2) to another component.

11. The multiple distributor (1) according to any one of the preceding claims, wherein at least one status display (26) is provided.

12. The multiple distributor (1) according to the preceding claim, wherein the status display (26) is used as a connection display and/or signal display and/or switch display.

13. The multiple distributor (1) according to any one of the preceding claims, wherein the receiving contour (15) has a peripheral contour catch (27) or contour groove (28).

14. The multiple distributor (1) according to the preceding claim, wherein the receiving contour (15) is designed cylindrical and has at least one clamping catch (29), in order to clamp the receiving contour (15) to a connecting sleeve (16) to be received.

## Revendications

1. Distributeur électrique multiple (1) avec un boîtier (2) et au moins trois raccordements électriques (3, 4, 5) et au moins un système de distribution (6) dans le boîtier (2) par l'intermédiaire duquel les raccordements électriques (3, 4, 5) peuvent être raccordés entre eux de manière ciblée, dans lequel le système de distribution (6) peut être positionné par un boîtier interne (7) du boîtier (2), et dans lequel on prévoit un dispositif de blindage électromagnétique (8) et un dispositif de protection contre l'humidité et/ou la poussière (9) au niveau du boîtier interne (7),
**caractérisé en ce**
**que** le boîtier interne (7) est réalisé de manière modulaire, moyennant quoi il est réalisé, au niveau de chacun des raccordements électriques (3, 4, 5), pour le raccordement au choix d'au moins une sortie de câble blindée (10) ou pour le raccordement d'au moins un connecteur enfichable (11), respectivement au moins un contour de réception (15) étant prévu à cet effet aux positions de raccordement (12) pour la réception d'une douille de raccordement (16) d'un connecteur enfichable (11) et au moins un dispositif à bornes (17) étant prévu à cet effet au niveau du boîtier interne (7) pour établir le contact avec une ligne de blindage (18) d'une sortie de câble (10).

2. Distributeur multiple (1) selon la revendication 1, dans lequel le système de distribution (6) comprend au moins une carte de circuits imprimés (19).

3. Distributeur multiple (1) selon la revendication 2, dans lequel au moins un composant électrique (20) est raccordé à la carte de circuits imprimés (19).

4. Distributeur multiple (1) selon l'une des revendications précédentes, dans lequel le boîtier interne (7) se compose de deux parties de boîtier (21, 22) en particulier identiques.

5. Distributeur multiple (1) selon la revendication 4, dans lequel les deux parties de boîtier interne (21, 22) présentent au moins un alésage (23) et un tenon (24) pour l'encliquetage l'une avec l'autre des parties de boîtier interne (21, 22).

6. Distributeur multiple (1) selon l'une des revendications précédentes, dans lequel le dispositif de blindage (8) comprend le boîtier interne (7) qui se compose d'un métal ou d'un plastique doté d'un revêtement conducteur.

7. Distributeur multiple (1) selon l'une des revendications précédentes, dans lequel le dispositif de protection contre l'humidité et/ou la poussière (9) est formé en entourant par injection le système de distribution (6) avec du plastique (25), de la résine synthétique ou de la colle.

8. Distributeur multiple (1) selon la revendication 2 ou la revendication 2 et au moins l'une des revendications 3 - 7, dans lequel le boîtier interne (7) présente, pour la réception de la carte de circuits imprimés (19), au moins une rainure de réception (30) dont les dimensions permettent une réception avec jeu de la carte de circuits imprimés.

9. Distributeur multiple (1) selon la revendication précédente, dans lequel, au niveau de la rainure de réception (30), il présente au moins deux tenons (32) espacés l'un de l'autre pour maintenir la carte de circuits imprimés (19) de manière définie au niveau de la rainure de réception (30).

10. Distributeur multiple (1) selon l'une des revendications précédentes, dans lequel on prévoit une ouverture (31) au niveau du boîtier (2) pour faire passer un moyen de fixation afin de fixer le boîtier (2) sur un autre élément constitutif.

11. Distributeur multiple (1) selon l'une des revendications précédentes, dans lequel on prévoit au moins un indicateur d'état (26).

12. Distributeur multiple (1) selon la revendication précédente, dans lequel l'indicateur d'état (26) sert d'indicateur de raccordement et/ou d'indicateur de signal et/ou d'indicateur de commutation.

13. Distributeur multiple (1) selon l'une des revendications précédentes, dans lequel le contour de réception (15) comprend un bec de contour (27) ou une rainure de contour (28) périphérique.

14. Distributeur multiple (1) selon la revendication précédente, dans lequel le contour de réception (15) est réalisé de manière cylindrique et présente au moins un bec presseur (29) pour presser ensemble le contour de réception (15) et une douille de raccordement (16) à réceptionner.
